**Europäisches Patentamt**

**European Patent Office**

**Office européen des brevets**

(19)

(11) Veröffentlichungsnummer: **0 048 516**
**A1**

(12) # EUROPÄISCHE PATENTANMELDUNG

(21) Anmeldenummer: **81201016.3**

(22) Anmeldetag: **11.09.81**

(51) Int. Cl.³: **F 16 D 7/02**
**G 11 B 15/50**

(30) Priorität: **22.09.80 AT 4732/80**

(43) Veröffentlichungstag der Anmeldung:
**31.03.82 Patentblatt 82/13**

(84) Benannte Vertragsstaaten:
**AT BE DE FR GB IT NL**

(71) Anmelder: **N.V. Philips' Gloeilampenfabrieken**
**Pieter Zeemanstraat 6**
**NL-5621 CT Eindhoven(NL)**

(72) Erfinder: **Prodinger, Arnold**
**P/A INT.OCTROOIBUREAU B.V. Prof.Holstlaan 6**
**NL-5656 AA Eindhoven(NL)**

(74) Vertreter: **Smit, Frederik Jan et al,**
**INTERNATIONAAL OCTROOIBUREAU B.V. Prof.**
**Holstlaan 6**
**NL-5656 AA Eindhoven(NL)**

(54) **Schlingfederkupplung.**

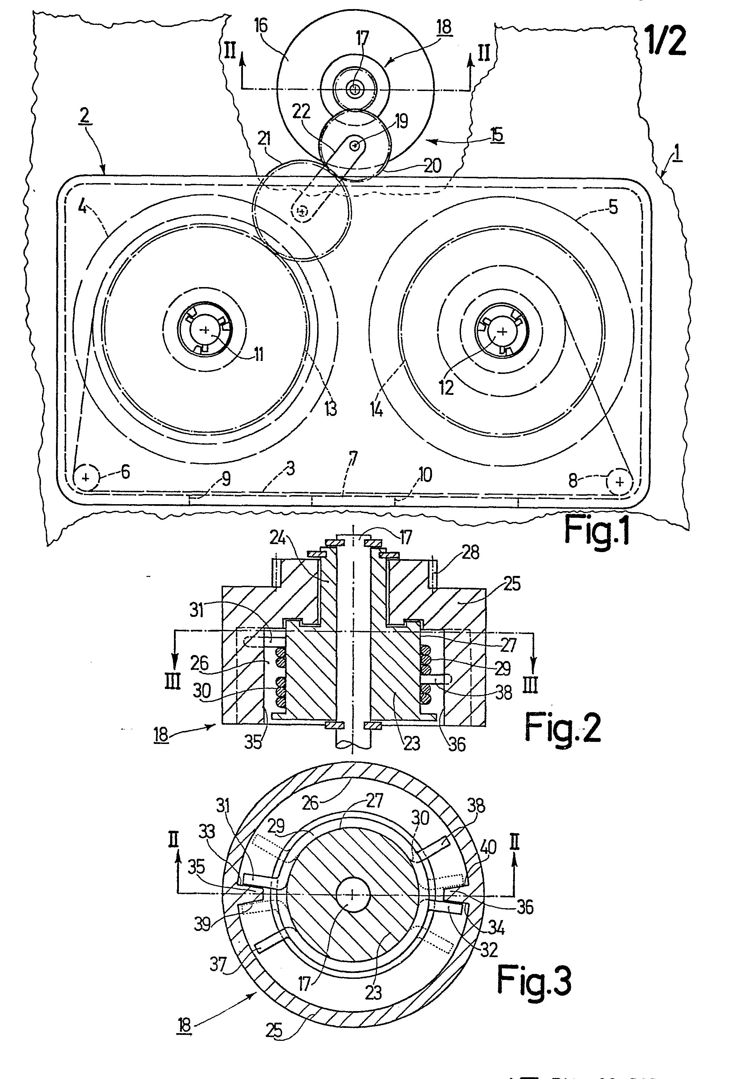

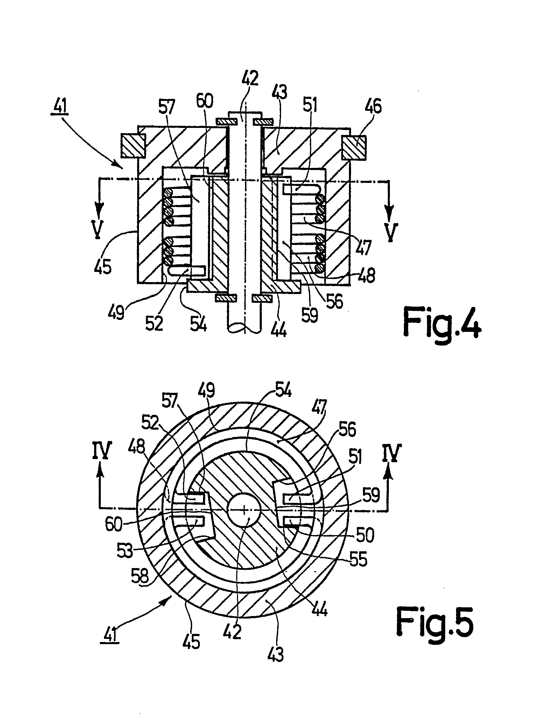

(57) Eine Schlingfederkupplung (18) mit zwei koaxialen Kupplungsteilen (23, 25) weist zur Kraftübertragung zwischen den beiden Kupplungsteilen mindestens zwei mit Vorspannung an mindestens einem ersten der beiden Kupplungsteile anliegende Schlingfedern (29, 30) auf. Die Schlingfedern haben je zwei frei auskragende Enden (31, 37, 32, 38), die sich bei entgegengesetzten Drehrichtungen je an einem Anschlag (33, 39, 34, 40) am zweiten Kupplungsteil (25) abstützen, wobei die je den beiden frei auskragenden Enden jeder Schlingfeder zugeordneten Anschläge paarweise in Umfangsrichtung gleichmässig gegeneinander versetzt angeordnet sind und je die von einem Anschlag über das frei auskragende Ende auf die Schlingfeder ausgeübte Kraft entgegen der durch die Vorspannung der Schlingfeder ausgeübten Kraft gerichtet ist. Auf diese Weise wird eine in entgegengesetzten Drehrichtungen als Ueberlastkupplung wirksame Schlingfederkupplung erhalten, wobei eine gleichmässige Kräfteverteilung auf die Kupplungsteile vorliegt (Fig. 2, 3).

Fig.2

Fig.3

EP 0 048 516 A1

0048516

"Schlingfederkupplung."

Die Erfindung bezieht sich auf eine Schlingfederkupplung, die als Ueberlastkupplung wirksam ist, insbesondere für Aufzeichnungs- und/oder Wiedergabegeräte, mit
einem ersten und einem zweiten Kupplungsteil, die koaxial
zueinander angeordnet und gegeneinander verdrehbar sind,
und mit mindestens einer zur Kraftübertragung zwischen
den beiden Kupplungsteilen vorgesehenen schraubenförmigen
Schlingfeder, die mit ihren Windungen mindestens am ersten
Kupplungsteil mit Vorspannung reibungsschlüssig anliegt
und von der ein erstes Ende frei auskragt, das sich bei
einer ersten Drehrichtung der beiden Kupplungsteile an
einem ersten am zweiten Kupplungsteil vorgesehenen Anschlag abstützt, wobei die von dem ersten Anschlag über
das erste frei auskragende Ende der Schlingfeder auf dieselbe ausgeübte Kraft gerichtet ist, und von der auch das
zweite Ende frei auskragt und sich bei der zur ersten Drehrichtung entgegengesetzten zweiten Drehrichtung der beiden
Kupplungsteile an einem zweiten ebenfalls am zweiten Kupplungsteil vorgesehenen Anschlag abstützt, wobei auch die
von dem zweiten Anschlag über das zweite frei auskragende
Ende der Schlingfeder auf dieselbe ausgeübte Kraft entgegen
der durch die Vorspannung der Schlingfeder ausgeübten Kraft
gerichtet ist. Eine solche Schlingfederkupplung ist beispielsweise aus der US-PS 2 793 515 bekannt.

Bei einer solchen bekannten Schlingfederkupplung
ist bei beiden Drehrichtungen derselben eine Kraftübertragung vom treibenden Kupplungsteil über die Schlingfeder
zum getriebenen Kupplungsteil bis zu einem vorgegebenen
maximal übertragbaren Drehmoment möglich, welches durch die
Vorspannung der Schlingfeder bestimmt ist. Diese Vorspannung wird dadurch erreicht, dass der Durchmesser der
Schlingfeder und die Durchmesser der Kupplungsteile so
aufeinander abgestimmt sind, dass sich beim Aufsetzen der

0048516

Schlingfeder auf den ersten Kupplungsteil eine solche
Aenderung des Durchmessers der Schlingfeder ergibt, dass
ein vorgegebener Reibungsschluss zwischen der Schlingfeder
und diesem Kupplungsteil besteht. Solange das übertragene
Drehmoment kleiner ist als das maximal übertragbare Drehmoment, bildet die Schlingfeder eine verdrehfeste Verbindung zwischen den beiden Kupplungsteilen, so dass im normalen Betrieb der Kupplung kein Durchrutschen zwischen der
Schlingfeder und dem ersten Kupplungsteil auftritt. Die im
Betrieb bei beiden Drehrichtungen von den am zweiten Kupplungsteil vorgesehenen Anschlägen über die frei auskragenden Enden der Schlingfeder auf dieselbe ausgeübte Kraft
ist entgegen der durch die Vorspannung ausgeübten Kraft
gerichtet und trachtet daher danach, eine solche Aenderung
des Durchmessers der Schlingfeder zu bewirken, dass eine
Verminderung des Reibungsschlusses der Schlingfeder zum
ersten Kupplungsteil eintritt. Bei Erreichen des maximal
übertragbaren Drehmomentes wird diese Aenderung des Durchmessers der Schlingfeder und damit die Verminderung des
Reibungsschlusses so gross, dass die Schlingfeder gegenüber dem ersten Kupplungsteil durchrutscht und die Kraftübertragung zwischen den beiden Kupplungsteilen begrenzt
ist. Bei beiden Drehrichtungen ist daher mit der Schlingfederkupplung ein Drehmoment übertragbar, das kleiner ist
als das maximal übertragbare Drehmoment. Eine solche bekannte Schlingfederkupplung ist somit in beiden Drehrichtungen als Ueberlastkupplung verwendbar.

Wie erwähnt, wird bei einer solchen bekannten
Schlingfederkupplung bei jeder Drehrichtung derselben von
einem Anschlag über das mit diesem zusammenwirkende frei
auskragende Ende der Schlingfeder auf dieselbe eine Kraft
ausgeübt, die eine Aenderung des Durchmessers der Schlingfeder und damit eine Verminderung des Reibungsschlusses
der Schlingfeder zum betreffenden Kupplungsteil zur Folge
hat. Um eine solche Aenderung des Durchmessers der Schlingfeder zu erreichen, muss das betreffende frei auskragende
Ende der Schlingfeder um einen bestimmten Verstellweg verstellt werden. Dieser Verstellweg kann aber, um eine ausreichend grosse Aenderung des Durchmessers der Schlingfeder zu erreichen, relativ gross sein, wodurch es zu einem Uebereinandergleiten der an das verstellte frei auskragende Ende angrenzenden Windungen der Schlingfeder kommen kann, wenn sich diese kegelförmig erweitert. Da bei der bekannten Schlingfederkupplung mit nur einer einzigen Schlingfeder jeweils nur ein Anschlag einseitig auf ein frei auskragendes Ende dieser Schlingfeder einwirkt, kommt es auch zu einer ungleichmässigen Kräfteverteilung auf die Kupplungsteile, wodurch kein guter Gleichlauf erreicht wird und eine hohe Abnützung in Kauf genommen werden muss.

Die Erfindung hat sich zur Aufgabe gestellt, eine einfache, betriebssichere und billige Schlingfederkupplung zu schaffen, bei der die Windungen mit Sicherheit nicht übereinander gleiten und bei der eine gleichmässige Kräfteverteilung auf die Kupplungsteile gewährleistet ist. Hiezu ist die Schlingfederkupplung eingang angeführter Art dadurch gekennzeichnet, dass mindestens zwei in axialer Richtung hintereinander liegende Schlingfedern und am zweiten Kupplungsteil je zwei Anschläge für die beiden frei auskragenden Enden jeder Schlingfeder vorgesehen sind und dass die je den beiden paarweise in Umfangsrichtung gleichmässig gegeneinander versetzt angeordnet sind. Auf diese Weise ist erreicht, dass die Schlingfedern je für sich kürzer ausgebildet sind, als bei Verwendung von nur einer einzigen Schlingfeder. Um eine bestimmte Aenderung des Durchmessers einer Schlingfeder zu erreichen und damit den Reibungsschluss zum betreffenden Kupplungsteil bei einer Ueberlastung entsprechend zu vermindern, ist aber bei jürzeren Federn nur ein geringerer Verstellweg für die betreffenden frei auskragenden Enden der kürzeren Schlingfedern erforderlich, als dies für das frei auskragende Ende bei einer einzigen längeren Schlingfeder der Fall ist. Hierdurch ist insbesondere einem Uebereinandergleiten der Windungen einer Schlingfeder vorgebeugt, was sich - wie eingangs erwähnt - bei einem grösseren Verstellweg für das frei auskragende Ende einer längeren Schlingfeder ergeben kann, wenn sich diese kegelförmig erweitert. Zusätzlich ist dadurch, dass die je den beiden frei auskragenden Enden jeder Schlingfeder zugeordneten Anschläge paarweise in Umfangsrichtung gleichmässig gegeneinander versetzt angeordnet sind, eine besonders gleichmässige Kräfteverteilung auf die Kupplungsteile im Betrieb der Schlingfederkupplung erhalten. Hierdurch ist ein guter Gleichlauf ohne Schlag und eine geringe Abnützung erreicht, womit eine Schlingfederkupplung hoher Qualität und langer Lebensdauer erhalten ist.

        Als vorteilhaft hat sich erwiesen, wenn die beiden Anschläge für die beiden frei auskragenden Enden jeder Schlingfeder durch die einander gegenüberliegenden Seitenwände je einer am zweiten Kupplungsteil vorgesehenen, von diesem auskragenden Leiste gebildet sind. Das Vorsehen der beiden Anschläge für die beiden frei auskragenden Enden jeder Schlingfeder an einer Leiste ist im Hinblick auf einen einfachen Aufbau vorteilhaft. Ferner wird hierdurch eine besonders einfach und leicht zusammensetzbare Kupplung erhalten, da bei deren Zusammenbau die Relativlage der beiden frei auskragenden Enden jeder Schlingfeder lediglich gegenüber der einen zugeordneten Leiste zu beachten ist, welche Relativlage ausserdem unkritisch ist.

        Als vorteilhaft hat sich auch erwiesen, wenn die beiden Anschläge für die beiden frei auskragenden Enden jeder Schlingfeder durch die einander gegenüberliegenden seitlichen Begrenzungswände je einer am zweiten Kupplungsteil vorgesehenen, in axialer Richtung verlaufenden, zum Einführen der frei auskragenden Enden einer Schlingfeder an einem Ende offenen Rinne gebildet sind, in welche je die beiden frei auskragenden Enden einer Schlingfeder hineinragen. Hierdurch kann eine solche Kupplung raumsparend ausgebildet werden, da in diesem Fall durch die Anschläge kein zusätzlicher Raum in Anspruch genommen wird. Ferner ist dabei auch ein einfacher Aufbau und ein sehr einfaches Zusammensetzen der Schlingfederkipplung erreicht, da beide frei auskragenden Enden jeder Schlingfeder gemeinsam nur in je eine Rinne einzuführen sind.

        Als vorteilhaft hat sich des weiteren erwiesen, wenn die Schlingfedern nur am ersten zylindrisch ausgebildeten Kupplungsteil an dessen Mantelfläche anliegen und wenn der zweite topfförmig ausgebildete Kupplungsteil die Schlingfedern entlang deren gesamter Längserstreckung mit seiner die beiden Anschläge für die beiden frei auskragenden Enden jeder Schlingfeder aufweisenden Innenwand mit Abstand umgreift. Auf diese Weise ist eine Schlingfederkupplung realisiert, bei der die Schlingfedern durch den topfförmig ausgebildeten zweiten Kupplungsteil vor Beschädigungen und Verschmutzung gut geschützt ist, so dass eine hohe Betriebssicherheit und ein gleichbleibendes Betriebsverhalten der Schlingfederkupplung erreicht ist.

Auch hat sich als vorteilhaft erweisen, wenn die Schlingfedern nur am ersten topfförmig ausgebildeten Kupplungsteil an dessen zylindrischer Innenwand anliegen und wenn der zweite zylindrisch ausgebildete, an seiner Mantelfläche die beiden Anschläge für die beiden frei auskragenden Enden jeder Schlingfeder aufweisende Kupplungsteil vom ersten Kupplungsteil und den Schlingfedern mit Abstand umgriffen ist. Auch hierdurch ist eine gut gegen Verschmutzung und Beschädigung geschützte Kupplung realisiert, die ferner den Vorteil bietet, dass bei vorgegebenen Abmessungen derselben ein grosses maximal übertragbares Drehmoment möglich ist, weil das mit Hilfe einer Schlingfederkupplung maximale übertragbare Drehmoment vom Durchmesser der Schlingfedern abhängt und dieser bei vorgegebenen Kupplungsdimensionen bei an der Innenwand des topfförmig ausgebildeten Kupplungsteiles anliegenden Schlingfedern grösser ist als bei an der Mantelfläche des vom topfförmig ausgebildeten Kupplungsteil umgebenen Kupplungsteiles anliegenden Schlingfedern.

Die Erfindung wird im folgenden anhand von zwei in den Zeichnungen dargestellten Ausführungsbeispielen, auf die sie jedoch nicht beschränkt sein soll, näher beschrieben. Die Fig. 1 zeigt schematisch in Draufsicht einen Teil eines Aufzeichnungs- und/oder Wiedergabegerätes für einen in einer Kassette untergebrachten bandförmigen Aufzeichnungsträger, wobei die Antriebseinrichtung für die beiden Wickeldorne eine Schlingfederkupplung gemäss einer ersten Ausführungsform der Erfindung aufweist, die Fig. 2 einen axialen Schnitt durch diese Schlingfederkupplung längs der Linie II-II in Fig. 1, die Fig. 3 einen Querschnitt durch die Schlingfederkupplung gemäss Fig. 2 längs der Linie III-III in Fig. 2, die Fig. 4 analog wie die Fig. 2 einen axialen Schnitt durch eine Schlingfederkupplung gemäss einer zweiten Ausführungsform der Erfindung und die Fig. 5 einen Querschnitt durch die Schlingfederkupplung gemäss Fig. 4 längs der Linie V-V in Fig. 4.

In Fig. 1 ist schematisch ein Teil eines Aufzeichnungs- und/oder Wiedergabegerätes 1 dargestellt, das zum Aufzeichnen bzw. zum Wiedergeben von Signalen, wie beispielsweise Tonsignalen, auf bzw. von einem in einer Kassette 2 untergebrachten bandförmigen Aufzeichnungsträger 3 vorgesehen ist. Die Kassette 2 enthält zwei nebeneinanderliegende Spulen 4 und 5, wobei der Aufzeichnungsträger von der Spule 4 über einen Umlenkstift 6 längs einer Seitenwand 7 und über einen weiteren Umlenkstift 8 zu der Spule 5 geführt ist. In der Seitenwand 7 sind zwei Oeffnungen 9 und 10 vorgesehen, durch die hindurch geräteseitige Abtastelemente, wie Magnetköpfe, mit dem bansförmigen Aufzeichnungsträger 3 in Wirkverbindung treten können. Die Kassette 2 ist auf das Gerät 1 aufgesetzt, wobei in die Kassette zwei Wickeldorne 11 und 12 ragen und mit den beiden in der Kassette untergebrachten Spulen 4 und 5 zum Auf- bzw. Abwickeln des bansförmigen Aufzeichnungsträgers 3 in antriebsmässiger Wirkverbindung stehen. Die Wickeldorne 11 und 12 sind mit zwei koaxialen als Wickelteiler dienenden Zahnrädern 13 und 14 verdrehfest verbunden.

Es ist allgemein bekannt, dass in einem solchen Aufzeichnungs- und/oder Wiedergabegerät der Aufzeichnungsträger beim Aufzeichnen bzw. Wiedergeben im sogenannten "Normalen Vorlauf" und zum raschen Umspulen von einer Spule zur anderen im "Schnellen Vorlauf" bzw. im "Schnellen Rücklauf" antreibbar ist. In Fig. 1 ist nur der Antrieb für die Spulen zum Umspulen des Aufzeichnungsträgers dargestellt.

0048516

Hierzu weist das Gerät 1 eine Antriebseinrichtung 15 auf, die einen in seiner Drehrichtung umkehrbaren Motor 16 enthält, der über eine auf seine Motorwelle 17 aufgesetzte, in Fig. 1 schematisch dargestellte Schlingfederkupplung 18 ein um eine gerätefeste Achse 19 drehbares Zwischenrad 20 antreibt. Das Zwischenrad 20 treibt seinerseits ein Antriebszahnrad 21 an, das auf einem um die Achse 19 schwenkbaren Arm 22 drehbar gelagert ist. Dabei ist die Anordnung so getroffen, dass das Antriebszahnrand 21 durch Verschwenken desselben mit jedem der beiden Zahnräder 13 und 14 in Wirkverbindung treten kann. Je nach der Drehrichtung des Motors 16 wird aufgrund der Reibung in der Antriebsrichtung 15 das Antriebszahnrad 21 in eine seiner beiden Antriebslagen verschwenkt, in denen dasselbe je mit einem der beiden Zahnräder 13 und 14 kämmt. In Fig. 1 ist jene Lage dargestellt, in der der Motor 16 die Schlingfederkupplung 18 entgegen dem Uhrzeigersinn antreibt und folglich das Antriebszahnrad 21 mit dem Zahnrad 13 kämmt, um den Aufzeichnungsträger im "Schnellen Rücklauf" auf die Spule 4 zurückzuspulen.

Im folgenden wird anhand der Figuren 2 und 3 die Schlingfederkupplung 18 näher erläutert. Sie weist einen mit der Motorwelle 17 drehfest verbundenen, zylindrisch ausgebildeten ersten Kupplungsteil 23 und einen auf einem hülsenförmigen Ansatz 24 dieses Kupplungsteiles drehbar gelagerten, koaxiale zu demselben angeordneten, im wesentlichen toppförmig ausgebildeten zweiten Kupplungsteil 25 auf, der mit seiner Innenwand 26 die Mantelfläche 27 des ersten Kupplungsteiles 23 mit Abstand umfreift. Der erste Kupplungsteil 23 bildet dabei den treibenden Kupplungsteil und der zweite Kupplungsteil 25 den getriebenen Kupplungsteil der Schlingfederkupplung, wobei der zweiten Kupplungsteil 25 einen Zahnkranz 28 aufweist, der mit dem Zwischenzahnrad 20 zu dessen Antrieb in Eingriff steht. Zur Kraftübertragung zwischen den beiden Kupplungsteilen 23 und 25 sind im vorliegenden Fall zwei schraubenförmige Schlingfedern 29 und 30 vorgesehen, die in axialer Richtung hintereinander liegen und die mit ihren Windungen nur an der Mantelfläche 27 des zylindrisch ausgebildeten ersten Kupplungsteiles 23 mit Vorspannung reibungsschlüssig anliegen und die der topfförmig ausgebildete zweite Kupplungsteil 25 in axialer Richtung entlang deren gesamter Längserstreckung mit einer Innenwand 26 mit Abstand umgreift.

Jede˙ der beiden Schlingfedern 29 bzw. 30 weist ein erstes frei auskragendes Ende 31 bzw. 32 auf, das sich bei einer ersten Drehrichtung der beiden Kupplungsteile, im vorliegenden Fall bei der Drehrichtung entgegen dem Uhrzeigersinn, an einem am topfförmig ausgebildeten zweiten Kupplungsteil 25 vorgesehenen ersten Anschlag 33 bzw. 34 abstützt, wobei die von dem ersten Anschlag 33 bzw. 34 über das frei auskragende Ende 31 bzw. 32 der Schlingfeder 29 bzw. 30 auf dieselbe ausgeübte Kraft entgegen der durch die Vorspannung der Schlingfeder 29 bzw. 30 ausgeübten Kraft gerichtet ist. Die ersten frei auskragenden Enden 31 und 32 der Schlingfedern 29 und 30 sind als sich in Richtung zur Innenwand 26 des topfförmig ausgebildeten Kupplungsteiles 25 erstreckende, in radialer Richtung verlaufende gerade Federarme ausgebildet. Die ersten Anschläge 33 und 34 sind durch Wandabschnitte der Innenwand 26 des topfförmig ausgebildeten zweiten Kupplungsteiles 25 gebildet,und zwar durch je eine erste Seitenwand einer von der Innenwand 26 des topfförmig ausgebildeten zweiten Kupplungsteiles 25 in radialer Richtung zum ersten Kupplungsteil 23 auskragenden Leiste 35 bzw. 36. Die beiden als Anschläge vorgesehenen ersten Seitenwände 33 und 34, an denen sich bei der ersten Drehrichtung der beiden Kupplungsteile entgegen dem Uhrzeigersinn die zugeordneten ersten frei auskragenden Enden 31 und 32 der Schlingfedern 29 und 30 abstützen, sind in Umfangsrichtung gleichmässig gegeneinander versetzt angeordnet und nehmen demgemäss einen gegenseitigen Winkelabstand von 180° ein.

Wie aus den Figuren 2 und 3 ersichtlich ist, kragt auch das zweite freie Ende 37 bzw. 38 jeder Schlingfeder 29 bzw. 30 von dieser frei aus und stützt sich, wie in Fig. 3 mit punktierten Linien angedeutet ist, bei der zur ersten Drehrichtung entgegengesetzten zweiten Drehrichtung der beiden Kupplungsteile, im vorliegenden Fall bei der Drehrichtung im Uhrzeigersinn, an einem zweiten ebenfalls am topfförmig ausgebildeten zweiten Kupplungsteil 25 vorgesehenen Anschlag 39 bzw. 40 ab, wobei auch die von dem zweiten Anschlag 39 bzw. 40 über das zweite frei auskragende Ende 37 bzw. 38 der Schlingfeder 29 bzw. 30 auf dieselbe ausgeübte Kraft entgegen der durch die Vorspannung der Schlingfeder ausgeübten Kraft gerichtet ist. Auch die zweiten frei auskragenden Enden 37 und 38 der Schlingfedern 29 und 30 sind als sich in Richtung zur Innenwand 26 des topfförmig ausgebildeten zweiten Kupplungsteiles 25 erstreckende, in radialer Richtung verlaufende gerade Federarme ausgebildet. Die zweiten Anschläge 39 und 40 sind ebenfalls durch Wandabschnitte der Innenwand 26 des topfförmig ausgebildeten zweiten Kupplungsteiles 25 gebildet, und zwar durch je eine zweite Seitenwand der von der Innenwand 26 des topfförmig ausgebildeten zweiten Kupplungsteiles 25 in radialer Richtung zum zylindrisch ausgebildeten ersten Kupplungsteil 24 auskragenden Leiste 35 bzw. 36. Somit sind die beiden Anschläge für die beiden Federarme 31 und 37 bzw. 32 und 38 jeder Schlingfeder 29 bzw. 30 durch die einander gegenüberliegenden Seitenwände 33 und 39 bzw. 34 und 40 je einer von der Innenwand 26 des topfförmig ausgebildeten zweiten Kupplungsteiles 25 auskragenden Leiste 35 bzw. 36 gebildet, was als besonders einfach anzusehen ist. Zu erwähnen ist noch, dass auch die beiden als Anschläge dienenden zweiten Seitenwände 39 und 40 der Leisten 35 und 36 in einem gegenseitigen Winkelabstand von 180° angeordnet sind. Damit sind die je den beiden frei auskragenden Enden 31 und 37 bzw. 32 und 38 jeder Schlingfeder 29 bzw. 30 zugeordneten Anschläge 33 und 39 bzw. 34 und 40 paarweise in Umfangsrichtung gleichmässig versetzt angeordnet.

Wenn der erste Kupplungsteil 23 vom Motor 16 über die Motorwelle 17 in der ersten Drehrichtung entgegen dem Uhrzeigersinn angetrieben wird, dann stützen sich die ersten frei auskragenden Federarme 31 und 32 der auf den zylindrisch ausgebildeten ersten Kupplungsteil mit Vorspannung aufgeschobenen und mit demselben reibungsschlüssig zusammenwirkenden Schlingfedern 29 und 30 an den ersten Seitenwänden 33 und 34 der von der Innenwand des topfförmig ausgebildeten zweiten Kupplungsteiles 25 auskragenden Leisten 35 und 36 ab und nehmen auf diese Weise den topfförmig ausgebildeten zweiten Kupplungsteil 25 entgegen dem Uhrzeigersinn mit. Die Schlingfedern bilden hierbei eine verdrehfeste Verbindung zwischen den beiden Kupplungsteilen. Bei dieser ersten Drehrichtung haben dann die an den ersten Seitenwänden 33 und 34 der Leisten 35 und 36 auftretenden Reaktionskräfte eine Kraft auf die Schlingfedern zufolge, die der Kraft der Vorspannung der Schlingfedern entgegengesetzt ist und somit bestrebt ist, den Durchmesser der Schlingfedern zu vergrössern und folglich die Schlingfedern von der Mantelfläche 27 des ersten Kupplungsteiles 23 abzuheben. Wird der erste Kupplungsteil 23 vom Motor 16 in der zweiten Drehrichtung im Uhrzeigersinn angetrieben, dann werden die Schlingfedern 29 und 30 auch in dieser zweiten Drehrichtung reibungsschlüssig mitgenommen und stützen sich die zweiten frei auskragenden Federarme 37 und 38 der Schlingfedern 29 und 30 an den zweiten Seitenwänden 39 und 40 der Leisten 35 und 36 ab und nehmen hierbei den topfförmig ausgebildeten Kupplungsteil 25 im Uhrzeigersinn mit. Die Schlingfedern bilden dabei wieder eine verdrehfeste Verbindung zwischen den beiden Kupplungsteilen. Auch bei dieser zweiten Drehrichtung haben dann die an den zweiten Seitenwänden 39 und 40 auftretenden Reaktionskräfte eine Kraft auf die Schlingfedern zur Folge, die ebenfalls der Kraft der Vorspannung der Schlingfedern entgegengesetzt ist und somit ebenfalls bestrebt ist, die Durchmesser der Schlingfedern zu vergrössern und die Schlingfedern von der Mantelfläche 27 des ersten Kupplungsteiles 23 abzuheben.

Auf vorstehend beschriebene Weise kann der topfförmig ausgebildete zweite Kupplungsteil in entgegengesetzten Drehrichtungen durch Drehrichtungsumkehr des Motors 16 angetrieben werden. Dabei kann bei beiden Drehrichtungen eine Kraftübertragung vom treibenden Kupplungsteil auf den getriebenen Kupplungsteil nur bis zu einem vorgegebenen maximal übertragbaren Drehmoment erfolgen, dessen Grösse durch die Vorspannung der Schlingfedern bestimmt ist. Sobald das maximal übertragbare Drehmoment überschritten wird, was bei einer entsprechenden Ueberlastung der Kupplung auftritt, überwiegen die von den Anschlägen über die zugeordneten Federarme auf die Schlingfedern ausgeübten Kräfte gegenüber den durch die Vorspannung der Schlingfedern bewirkten Kräften, so dass dann die Schlingfedern durch Verstellung der frei auskragenden Federenden soweit von der Mantelfläche des ersten Kupplungsteiles abgehoben werden, dass eine so starke Verminderung des Reibungsschlusses der Schlingfedern gegenüber dem ersten Kupplungsteil eintritt, dass die Schlingfedern gegenüber dem ersten Kupplungsteil durchrutschen, wodurch die Kraftübertragung zwischen den beiden Kupplungsteilen begrenzt ist.

Bei vorliegender Kupplung wird bei beiden Drehrichtungen auf die Schlingfedern eine Kraft ausgeübt, die der durch die Vorspannung der Schlingfedern bewirkten Kraft entgegengesetzt ist und die im Ueberlastungsfalle für eine Verminderung des Reibungsschlusses und damit eine Begrenzung des maximal übertragbaren Drehmomentes sorgt, so dass die Schlingfederkupplung bei beiden Drehrichtungen als Ueberlastkupplung wirkt. Diese Kupplung weist hierbei den Vorteil eines einfachen Zusammenbauens auf, da hierbei die Relativlage der beiden Federarme jeder Schlingfeder gegenüber der mit denselben zusammenwirkenden Leiste unkritisch ist. Aufgrund der Tatsache, dass der topfförmig ausgebildete zweite Kupplungsteil die Schlingfedern in axialer Richtung entlang deren gesamter Längserstreckung umgreift ist ein guter Schutz gegen Verschmutzung und Beschädigung erreicht, was eine hohe Betriebssicherheit und ein stets gleichbleibendes Betriebsverhalten gewährleistet. Durch das Vorsehen von zwei Schlingfedern ist erreicht, dass diese kurz ausgebildet sind und dass deshalb mit kleinen Verstellwegen für die Federarme, um im Falle einer Ueberlastung ein Durchrutschen der Schlingfedern zu erreichen, das Auslangen gefunden wird, wodurch einem Übereinandergleiten

der Windungen der Schlingfedern vorgebeugt ist. Ferner wird durch das Vorsehen von zwei Schlingfedern, die mit zwei in Umfangsrichtung gleichmässig gegeneinander versetzt angeordneten Anschlägen zusammenwirken, eine gleichmässige Kräfteverteilung auf die Kupplungsteile erreicht, was im Hinblick auf einen guten Gleichlauf ohne Schlag und eine geringe Abnützung vorteilhaft ist, womit eine Kupplung hoher Qualität und langer Lebensdauer realisiert ist. Falls es wünschenswert wäre, könnten selbstverständlich bei dieser Kupplung auch mehr als zwei Schlingfedern vorgesehen sein. Auch kann für jeden frei auskragenden Federarm eine separate Leiste als Anschlag vorgesehen sein; die Leisten könnten gegebenenfalls auch in axialer Richtung vom zweiten Kupplungsteil auskragen.

Wie erwähnt, ist die erfindungsgemässe Schlingfederkupplung in beiden Drehrichtungen als Ueberlastkupplung wirksam. Dies ist insbesondere bei einem wie in Fig. 1 dargestellten Antrieb für die Wickeldorne eines Aufzeichnungs- und/oder Wiedergabegerätes von besonderer Wichtigkeit. Wenn nämlich beim Umspulen des in der Kassette 2 untergebrachten Aufzeichnungsträgers 3, dessen beide Enden mit den Spulen 4 und 5 fest verbunden sind, ein Ende desselben erreicht wird, hat dies zur Folge, dass die Spulen zum Stillstand kommen und nicht mehr weiter angetrieben werden können. Da aber der Motor 16 der Antriebseinrichtung 15 zumindest eine Zeitspanne bis zum Einsetzen einer gegebenenfalls automatischen Abschalteinrichtung für denselben weiterläuft, könnte es ohne Vorsehen einer erfindungsgemässen Schlingfederkupplung durch die von den stillstehenden Spulen verursachte Ueberlastung zu Beschädigungen des Motors und der Antriebseinrichtung für die Spulen, beispielsweise der Zähne der Zahnräder, kommen. Durch das Vorsehen der erfindungsgemässen Schlingfederkupplung ist einer solchen Gefahr vorgebeugt, da sofort bei Auftreten einer Ueberlastung ein Durchrutschen der Schlingfedern gegenüber dem mit denselben reibungsschlüssig zusammenwirkenden Kupplungsteil auftritt und damit eine Begrenzung der Kraftübertragung vom Motor zu den Spulen erreicht ist.

Dabei ist es wichtig, dass die erfindungsgemässe Schlingfederkupplung in beiden Drehrichtungen als Ueberlastkupplung wirksam ist, da eine durch das Erreichen des Endes des
Aufzeichnungsträgers verursachte Ueberlastung bei beiden
Drehrichtungen des Motors, also sowohl beim "Schnellen
Vorlauf" als auch beim "Schnellen Rücklauf" des Aufzeichnungsträgers, auftreten kann.

In den Figuren 4 und 5 ist eine weitere Schlingfederkupplung 41 dargestellt, die einen auf einer Welle
42 drehbar gelagerten, topfförmig ausgebildeten ersten
Kupplungsteil 43 und einen mit der Welle 42 drehfest verbundenen, zylindrisch ausgebildeten zweiten Kupplungsteil 44 aufweist. Der zylindrisch ausgebildete zweite
Kupplungsteil 44 ist in den topfförmig ausgebildeten
ersten Kupplungsteil 43 eingeführt, wobei der zweite Kupplungsteil vom ersten Kupplungsteil mit Abstand umgriffen
ist. Dabei bildet der zylindrisch ausgebildete zweite Kupplungsteil den treibenden Kupplungsteil und der topfförmig
ausgebildete erste Kupplungsteil den getriebenen Kupplungsteil. Der erste Kupplungsteil 43 trägt an seiner Aussenwand 45 einen aus Gummi bestehenden Ring 46, der als Reibrad beispielsweise zum Antrieb von drehfest mit den Wickeldornen verbundenen Reibrädern dient.

Zur Kraftübertragung zwischen den beiden Kupplungsteilen 43 und 44 sind bei dieser Kupplung zwei in
axialer Richtung hintereinander liegende Schlingfedern
47 und 48 vorgesehen, die in axialer Richtung mit ihrer
gesamten Längserstreckung in den topfförmig ausgebildeten
ersten Kupplungsteil 43 eingesetzt sind und mit ihren Windungen nur an der zylindrischen Innenwand 49 desselben mit
Vorspannung reibungsschlüssig anliegen. Die beiden Enden 50
und 51 bzw. 52 und 53 der beiden Schlingfedern 47 und 48
kragen von denselben frei aus und sind als im wesentlichen
radial verlaufende, zur Mantelfläche 54 des zylindrisch
ausgebildeten zweiten Kupplungsteiles 44 sich erstreckende
gerade Federarme ausgebildet, die sich in Abhängigkeit von
der Drehrichtung der beiden Kupplungsteile je an einem am
zweiten Kupplungsteil 44 vorgesehenen Anschlag abstützen.

Dabei sind beide Anschläge durch die einander gegenüberliegenden seitlichen Begrenzungswände 55 und 56 bzw. 57 und 58 einer in der Mantelfläche 54 des zylindrisch ausgebildeten zweiten Kupplungsteiles 44 vorgesehenen Rinne 59 bzw. 60 gebildet, in welche die beiden frei auskragenden Federarme 50 und 51 bzw. 52 und 53 der Schlingfedern 47 und 48 hineinragen. Es sind somit am zweiten Kupplungsteil 44 wieder je zwei Anschläge 55 und 56 bzw. 57 und 58 für die beiden frei auskragenden Enden 50 und 51 bzw. 52 und 53 jeder Schlingfeder 47 bzw. 48 vorgesehen, wobei die Anschläge paarweise in Umfangsrichtung gleichmässig gegeneinander versetzt angeordnet sind. Die Rinnen 59 und 60 verlaufen in axialer Richtung und sind an dem dem geschlossenen Ende des topfförmig ausgebildeten ersten Kupplungsteiles 43 zugewandten Ende des zylindrisch ausgebildeten Kupplungsteiles 44 zum Einführen der beiden frei auskragenden Federarme 50 und 51 bzw. 52 und 53 jeder Schlingfeder 47 bzw. 48 offen ausgebildet.

Bei einer ersten Drehrichtung der Kupplungsteile 43 und 44, und zwar bei der Drehrichtung entgegen dem Uhrzeigersinn, stützen sich die Federarme 50 und 52 der beiden Schlingsfedern 47 und 48 an den seitlichen Begrenzungswänden 55 und 57 ab, wobei diese über die Federarme 50 und 52 auf jede Schlingfeder 47 bzw. 48 eine Kraft ausüben, die entgegen der durch die Vorspannung jeder Schlingfeder ausgeübten Kraft gerichtet ist. Die von jeder Begrenzungswand 55 bzw. 57 auf die Schlingfeder 47 bzw. 48 ausgeübte Kraft hat in diesem Fall eine Verringerung des Durchmessers jeder Schlingfeder zur Folge und damit wiederum eine Verminderung des Reibungsschlusses zwischen jeder Schlingfeder und dem mit derselben reibungsschlüssig zusammenwirkenden ersten Kupplungsteil. Bei der zur ersten Drehrichtung entgegengesetzten Drehrichtung, hier bei der Drehrichtung im Uhrzeigersinn, stützen sich die Federarme 51 und 53 an den Begrenzungswänden 56 und 58 ab, wobei diese über die Federarme 51 und 53 auf jede Schlingfeder 47 bzw. 48 ebenfalls eine Kraft ausüben, die entgegen der durch die Vorspannung jeder Schlingfeder ausgeübten Kraft gerichtet ist. Auch in diesem Fall wird daher eine Verminderung des Reibungsschlusses erzielt. Bei einer Ueberlastung werden daher bei
beiden Drehrichtungen über einen der beiden Federarme die
Schlingfedern so belastet, dass ihre Windungen aufgrund
der Durchmesserverringerung der Schlingfedern etwas von
der Innenwand 49 des topfförmig ausgebildeten ersten Kupplungsteiles 43 abheben, wodurch es dann zum Durchrutschen
der Schlingfedern gegenüber diesem Kupplungsteil kommt und
eine Begrenzung der Kraftübertragung erreicht ist.

Mit dieser einfachen Schlingfederkupplung, die
in beiden Drehrichtungen als Ueberlastkupplung wirksam ist,
sind relativ grosse maximale Drehmomente übertragbar, da
der Durchmesser der Schlingfedern, der für die Grösse des
maximal übertragbaren Drehmomentes einer Schlingfederkupplung mitbestimmend ist, gegenüber Kupplungen mit am inneren
zylindrisch ausgebildeten Kupplungsteil anliegenden Schlingfedern grösser ist. Durch die Ausbildung der Anschläge als
seitliche Begrenzungswände von Rinnen in der Mantelfläche
des zylindrisch ausgebildeten zweiten Kupplungsteiles ist
ein einfacher und kompakter Aufbau erreicht. Auch ist diese
Kupplung wieder durch einfaches Einführen des zylindrisch
ausgebildeten Kupplungsteiles in den die Schlingfedern
tragenden topfförmig ausgebildeten Kupplungsteil zusammensetzbar, wobei die Federarme der Schlingfedern ungehindert
und einfach in die entsprechende Rinne eindringen. Durch
das Vorsehen von zwei Schlingfedern können dieselben kurz
ausgebildet sein, was im Hinblick auf einen kleinen Verstellweg, um ein Durchrutschen der Schlingfedern zu erreichen, vorteilhaft ist. Hierdurch ist einem Uebereinandergleiten der Windungen vorgebeugt. Durch die gleichmässige
Verteilung der mit den frei auskragenden Federenden zusammenwirkenden Anschläge ist eine gleichmässige Kräfteverteilung auf die Kupplungsteile erreicht, wodurch ein
guter Gleichlauf und eine geringe Abnützung erreicht ist.
Auch bei dieser Kupplung könnten gegebenenfalls mehr als
zwei Schlingfedern verwendet werden.

Selbstverständlich sind noch eine Reihe weiterer
Ausführungsformen im Rahmen der Erfindung möglich. Dies beispielsweise im Hinblick auf die Ausbildung der Anschläge im Bereich, wo diese mit den frei auskragenden Enden der Schlingfedern zusammenwirken. Hinzuweisen ist auch darauf, dass bei allen vorstehend erläuterten Schlingfederkupplungen die Funktion des treibenden und des getriebenen Kupplungsteiles vertauscht werden kann, wobei die Wirksamkeit als Ueberlastkupplung in den entgegengesetzten Drehrichtungen zur Gänze erhalten bleibt. Selbstverständlich können die erfindungsgemässen Schlingfederkupplungen auch in Verbindung mit anderen Antriebselementen eines Aufzeichnungs- und/oder Wiedergabegerätes eingesetzt werden, als dies anhand von Fig. 1 vorstehend beschrieben ist; so kann beispielsweise eine solche Schlingfederkupplung auch koaxial zu einem Wickeldorn angeordnet sein.

0048516

PATENTANSPRUECHE:

1.        Schlingfederkupplung, die als Ueberlastkupplung wirksame ist, insbesondere für Aufzeichnungs- und/oder Wiedergabegeräte, mit einem ersten und einem zweiten Kupplungsteil, die koaxial zueinander angeordnet und gegeneinander verdrehbar sind, und mit mindestens einer zur Kraftübertragung zwischen den beiden Kupplungsteilen vorgesehenen schraubenförmigen Schlingfeder, die mit ihren Windungen mindestens am ersten Kupplungsteil mit Vorspannung reibungsschlüssig anliegt und von der ein erstes Ende frei auskragt, das sich bei einer ersten Drehrichtung der beiden Kupplungsteile an einem ersten am zweiten Kupplungsteil vorgesehenen Anschlag abstützt, wobei die von dem ersten Anschlag über das erste frei auskragende Ende der Schlingfeder auf dieselbe ausgeübte Kraft entgegen der durch die Vorspannung der Schlingfeder ausgeübten Kraft gerichtet ist, und von der auch das zweite Ende frei auskragt und sich bei der zur ersten Drehrichtung entgegengesetzten zweiten Drehrichtung der beiden Kupplungsteile an einem zweiten ebenfalls am zweiten Kupplungsteil vorgesehenen Anschlag abstützt, wobei auch die von dem zweiten Anschlag über das zweite frei auskragende Ende der Schlingfeder auf dieselbe ausgeübte Kraft entgegen der durch die Vorspannung der Schlingfeder ausgeübten Kraft gerichtet ist, dadurch gekennzeichnet, dass mindestens zwei in axialer Richtung hintereinander liegende Schlingfedern (29, 30; 47, 48) und am zweiten Kupplungsteil (25; 44) je zwei Anschläge (33, 39, 34, 40; 55, 56, 57, 58) für die beiden frei auskragenden Enden (31, 37, 32, 38; 50, 51, 52, 53) jeder Schlingfeder vorgesehen sind und dass die je den beiden frei auskragenden Enden jeder Schlingfeder zugeordneten Anschläge paarweise in Umfangsrichtung gleichmässig gegeneinander versetzt angeordnet sind.

2.        Schlingfederkupplung nach Anspruch 1, dadurch gekennzeichnet, dass die beiden Anschläge für die beiden frei auskragenden Enden (31, 37, 32, 38) jeder Schlingfeder (29, 30) durch die einander gegenüberliegenden Seitenwände (33, 39, 34, 40) je einer am zweiten Kupplungsteil (25) vorgesehenen, von diesem auskragenden Leiste (35, 36) gebildet sind (Fig. 2, 3).

3. Schlingfederkupplung nach Anspruch 1, dadurch gekennzeichnet, dass die beiden Anschläge für die beiden frei auskragenden Enden (50, 51, 52, 53) jeder Schlingfeder (47, 48) durch die einander gegenüberliegenden seitlichen Begrenzungswände (55, 56, 57, 58) je einer am zweiten Kupplungsteil (44) vorgesehenen, in axialer Richtung verlaufenden, zum Einführen der frei auskragenden Enden einer Schlingfeder an einem Ende offenen Rinne (59, 60) gebildet sind, in welche je die beiden frei auskragenden Enden einer Schlingfeder hineinragen (Fig. 4, 5).

4. Schlingfederkupplung nach einem der vorhergehenden Ansprüche, dadurch gekennzeichnet, dass die Schlingfedern (29, 30) nur am ersten zylindrisch ausgebildeten Kupplungsteil (23) an dessen Mantelfläche (27) anliegen und dass der zweite topfförmig ausgebildete Kupplungsteil (25) die Schlingfedern entlang deren gesamter Längserstreckung mit seiner die beiden Anschläge (33, 39, 34, 40) für die beiden frei auskragenden Enden (31, 37, 32, 38) jeder Schlingfeder aufweisenden Innenwand (26) mit Abstand umgreift (Fig. 2, 3).

5. Schlingfederkupplung nach einem der Ansprüche 1 bis 3, dadurch gekennzeichnet, dass die Schlingfedern (47, 48) nur am ersten topfförmig ausgebildeten Kupplungsteil (43) an dessen zylindrischer Innenwand (49) anliegen und dass der zweite zylindrisch ausgebildete, an seiner Mantelfläche (54) die beiden Anschläge (55, 56, 57, 58) für die beiden frei auskragenden Enden (50, 51, 52, 53) jeder Schlingfeder aufweisende Kupplungsteil (44) vom ersten Kupplungsteil und den Schlingfedern mit Abstand umgriffen ist (Fig. 4, 5).

Fig.1

Fig.2

Fig.3

0048516

1/2

1-II-PHO 80-507

0048516

Fig.4

Fig.5

**0048516**

Nummer der Anmeldung

**EP 81 20 1016**

| | Europäisches Patentamt | **EUROPÄISCHER RECHERCHENBERICHT** |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>DE - C - 627 353</u> (BAMAG-MEGUIN) <br> * Insgesamt * | 1-5 |
| | <u>DE - A - 1 801 339</u> (DUCELLIER) <br> * Insgesamt * | 1,5 |
| | <u>US - A - 3 084 880</u> (GRANT) <br> * Spalten 6-8; Abbildungen 3,6 * | 1,4 |
| D | <u>US - A - 2 793 515</u> (HUNSTIGER) <br> * Insgesamt * | 1,4 |
| A | <u>US - A - 3 104 745</u> (WIPKE) | |
| A | <u>US - A - 3 242 696</u> (KAPLAN) | |

### KLASSIFIKATION DER ANMELDUNG (Int. Cl.³)

F 16 D  7/02
G 11 B  15/50

### RECHERCHIERTE SACHGEBIETE (Int. Cl.³)

F 16 D  7/00
       43/00
G 11 B  15/00
B 23 B
B 23 Q

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 04-12-1981 | BALDWIN |

EPA form 1503.1  06.78